# EUROPEAN PATENT APPLICATION

(11) **EP 0 865 770 A1**
(43) Date of publication of application: **23.09.1998**
(21) Application number: 98500007.4
(22) Date of filing: 16.01.1998
(51) Int. Cl.: A61C 17/00, A61C 17/02

(54) **Dental irrigation device with a customized tray**

(30) Priority: 22.01.1997 ES 9700121
(71) Applicant: Ilzarbe Querol, Luis Maria, 46010 Valencia (ES)
(72) Inventor: Ilzarbe Querol, Luis Maria, 46010 Valencia (ES)

(57) **Abstract**

In treatments for gum inflammation, prophylaxis and oral hygiene a local irrigation procedure with therapeutical fluid is used. It is an object of this invention that the therapeutical fluid is sprayed direct and simultaneously on all points of the dental plate previously determined by the dental surgeon thus improving the treatment effectiveness.

The therapeutical fluid (10) contained in the dispenser (9) and propelled by the pump (8), whose flow is controlled by a electrovalve (7) governed by the processor (6) according to the operating program, reaches the collector (5), it is directed through the channels (4) and then ejected through the nozzles (3), conveniently placed on the dental mould (2) in the corresponding patient-customized tray (1). In addition, so as to prevent its contamination, the device ensures the therapeutical fluid insulation from the environment.

## Description

The present invention relates to a device for oral irrigation with therapeutical fluids, for application in therapeutical treatments and human or veterinary dental prophylaxis.

Local and specific irrigation methods with therapeutical liquid are used on the affected area in treatments for patients' gum inflammation, around the tooth neck and in oral prophylaxis and hygiene.

At present, the irrigation procedure is carried out manually, by spraying the therapeutical liquid on the affected area using a syringe. This method turns to be very laborious and hardly ever complete; in addition, because the prophylactic action involves continuity and prolongation in time, the said process requires an great dose of motivation and perseverance both in the therapist and the patient.

It is an object of the present invention to avoid the inconveniences of the manual system, since professionals are aware of the lack of effectiveness of this procedure due to its difficult execution, as they are also aware of the need to introduce a culture of an easy to use prophylaxis and periodontal maintenance.

It is an object of the Dental Irrigation Device with a Customized Tray which this Report relates to, to allow the therapeutical fluid to be sprayed direct, simultaneous and automatically on the patient's mouth areas previously determined by the dental surgeon. The intensity of the spray, duration and sequence of the irrigation intervals and other factors which may have an influence on the treatment effectiveness may be also programmed and controlled along the whole process, following the guidelines given by the dental surgeon in each specific situation.

The range of application of this invention falls within the manufacturing industry of apparatus, devices and auxiliary equipment for human and veterinary dental surgery.

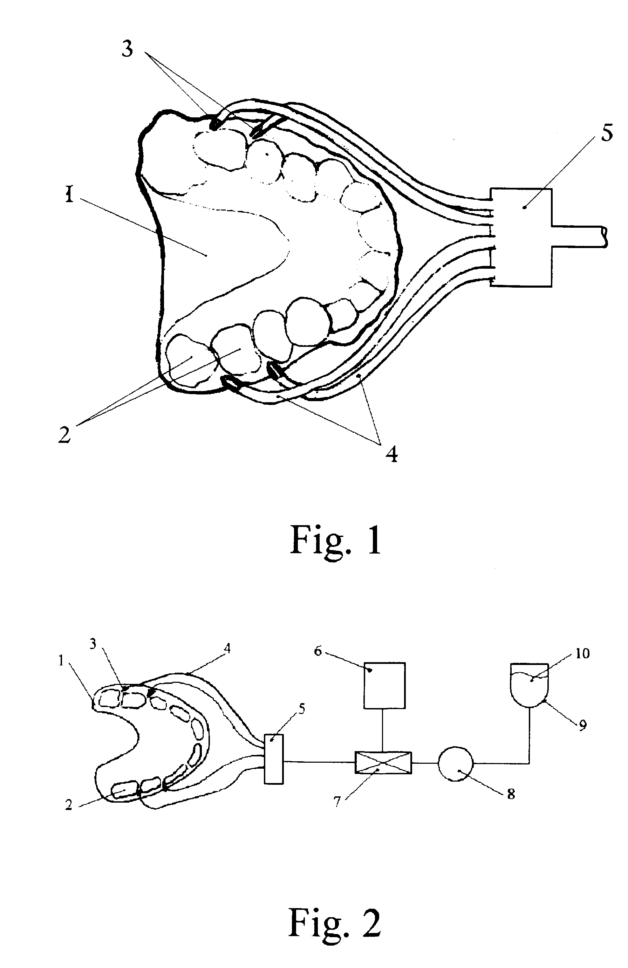

In order to complete the present description and help for a better understanding of the characteristics of the invention, the present descriptive report is accompanied, as an integral part of the same, by a drawing sheet where, with an illustrative and not restrictive character, the following has been represented:
Figure number 1 (Fig.1).- It comprises a ground view of the customized oral tray; the tray has been moulded from the patient's dental anatomy and an irrigation channel system starting from a joint collector, with a discharge nozzle at each channel distal end, has been incorporated thereto. This set represents the main part of the device subject to this invention.
Figure number 2 (Fig.2).- It consists of a diagrammatic view of the Tray interconnected with the different elements of the Device, which operate in cooperation with the specialist operator in order to attain the desired results.

Upon seeing these figures it can be observed that the Dental Irrigation Device with a Customized Tray comprises an anatomic tray (1) of either a plastic or metallic material, made from a mould of the patient's dental configuration (2) so that it adjusts perfectly to the patient's anatomy when it is placed on his mouth while the device is on operation.

The tray has a system of irrigation channels (4), either rigid or flexible, which start from a joint collector (5); the distal end of each channel is connected to a discharge nozzle (3) fixed to the tray and placed and oriented in the direction prescribed by the dental surgeon, so that its exit orifice points to the area to be irrigated once the tray has been place in the patient's mouth.
The device comprises a pressure generator (8), which may be either a plunger, rotary, peristaltic or vibrating pump or a mere volumetric contraction of the fluid container, which gives the fluid the necessary energy to circulate along the whole circuit and be ejected outside trough the discharge nozzles (3) with sufficient speed.
It also comprises a system to control the therapeutical flow, which consists of an electrovalve (7) governed by a processor (8) which automatically activates the circuit according to a program prescribed by the dental surgeon.

Any kind of therapeutical fluid (10) may be employed in the dental irrigation device with a customized tray; those commercially packed may be connected to the circuit with their own container, while magistral preparations may be incorporated to the circuit by means of a dispenser (9).

The materials employed in the component manufacturing, their shape, size and element layout, as well as the commercial equipment for data processing and control will be independent from the object of the invention and will be subject to variations, whenever it does not involve an alteration in the speciality of the invention.
The terms described in this report must be always understood in their broad and non-restrictive sense.

## Claims

1. A Dental Irrigation Device with a Customized Tray which comprises an oral tray (1) adapted to the patient's dental configuration (2), provided with a system of irrigation channels (4) which converge on a joint collector (5) where the therapeutical fluid (10) is made circulate along, under pressure, by means of the pump (8) and then ejected outside through the respective final nozzle (3) of each channel.

2. A Dental Irrigation Device with a Customized Tray of Claim 1, characterised because the intensity and circulating sequence of the therapeutical fluid flow may be controlled by a electrovalve (7) governed by a processor (6) which operates automatically according to a predetermined program.

3. A Dental Irrigation Device with a Customized Tray as of Claims 1 and 2, characterised because the channel system for the therapeutical fluid has been expressly designed to avoid its contamination so that the device ensures the lack of contact of the therapeutical fluid with the environment, from the inside of its container to the final nozzle of each channel.
